(19) Europäisches Patentamt / European Patent Office / Office européen des brevets

(11) **EP 3 431 270 A1**

(12) **EUROPEAN PATENT APPLICATION**
published in accordance with Art. 153(4) EPC

(43) Date of publication:
**23.01.2019 Bulletin 2019/04**

(21) Application number: **17766010.7**

(22) Date of filing: **06.01.2017**

(51) Int Cl.:
*B29C 67/00* (2017.01)  *B22F 3/105* (2006.01)
*B22F 3/16* (2006.01)  *B33Y 30/00* (2015.01)
*B33Y 50/02* (2015.01)

(86) International application number:
**PCT/JP2017/000231**

(87) International publication number:
**WO 2017/159002 (21.09.2017 Gazette 2017/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **16.03.2016 JP 2016052620**

(71) Applicant: **Ricoh Company, Ltd.**
**Tokyo 143-8555 (JP)**

(72) Inventor: **YUKUMOTO, Reiji**
**Tokyo 143-8555 (JP)**

(74) Representative: **Watkin, Timothy Lawrence Harvey**
**Marks & Clerk LLP**
**Fletcher House**
**The Oxford Science Park**
**Heatley Road**
**Oxford OX4 4GE (GB)**

(54) **INFORMATION PROCESSING DEVICE, PROGRAM, INFORMATION PROCESSING METHOD AND MOLDING SYSTEM**

(57)    An information processing apparatus for providing data for modeling to an additive manufacturing apparatus that models a modeling object by repeatedly stacking layers of material is provided. The information processing apparatus includes a volume calculation unit configured to calculate a volume of the modeling target and a support-part-modeling-method determination unit configured to determine a modeling method of a support part that supports the modeling target according to the volume.

FIG.13

**Description**

BACKGROUND OF THE INVENTION

1. Field of the Invention

The present invention relates to an information processing apparatus, a program, an information processing method, and a modeling system.

2. Description of the Related Art

Additive manufacturing apparatuses for manufacturing an object based on a 3D model having a three-dimensional shape represented by 3D data are known. The additive manufacturing apparatuses produce a modeling object by stacking sliced layers of the 3D model one on top of the other. Because of this kind of modeling procedure, when modeling an overhang structure (whose inclination angle is greater than 90 degrees) or a three-dimensional part that is hung from upwards and under which there is no modeling object, it is necessary for the additive manufacturing apparatus to model a support part that supports the overhang structure under the overhang structure.

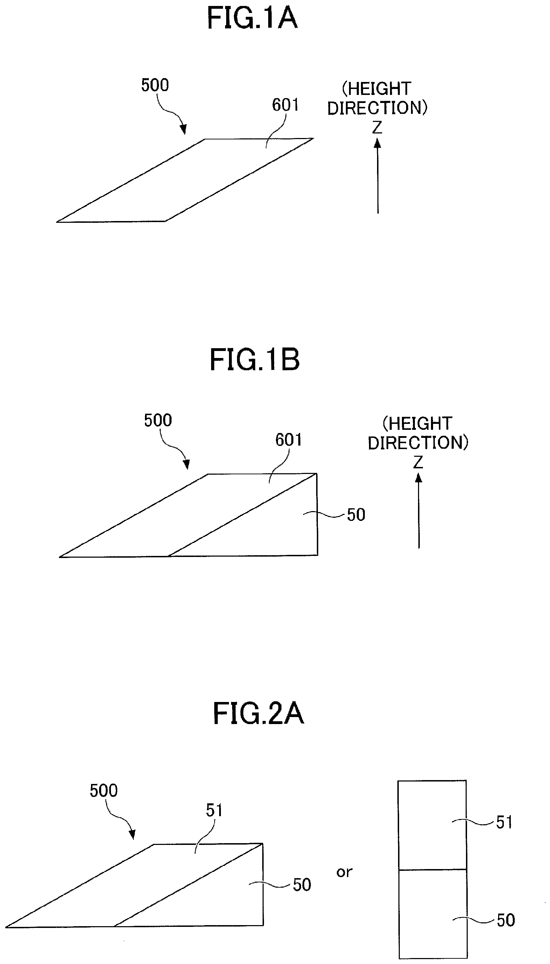

Fig. 1A and Fig. 1B are drawings illustrating an overhang part 601 and a support part 50 for the overhang part 601 as the shape of a modeling target. Fig. 1A is a side view of the overhang part 601 of a 3D model 500. Because it is difficult to model the overhang part 601 in the air by stacking layers, as illustrated in Fig. 1B, the support part 50 is modeled before modeling the overhang part 601. As described above, because the support part 50 is modeled in addition to the 3D model 500 needed by a user, the support 50 is removed after the completion of the modeling. Typically, the removal work is performed manually by the user, which is an extra work for the user, and there may be a case in which the removal work provides a bad impact on the surface quality of the modeling object.

With respect to the above, a technique is known in which a portion, of the support part 50, that touches the 3D model is modeled by using a material with high releasability (e.g., refer to Patent Document 1).

However, in a method in which the material of the support part 50 is changed as described in Patent Document 1, there is a problem that an appropriate material needs to be prepared. In other words, because the degree of the releasability between the support part 50 and the overhang part 601 included in the modeling target differs depending on a combination of two materials, when the material used for modeling the modeling object is changed, the corresponding appropriate material of the support part 50 having good releasability also needs to be prepared (or developed) separately.

[Citation List]

[Patent Document]

[Patent Document 1] Japanese Unexamined Patent Application Publication No. 2004-255839

SUMMARY OF THE INVENTION

[TECHNICAL PROBLEM]

In view of the above problem, an object of the present invention is to provide an information processing apparatus capable of modeling a support part that can be easily removed.

[SOLUTION TO PROBLEM]

According to an embodiment of the present invention, an information processing apparatus for providing data for modeling to an additive manufacturing apparatus that models a modeling object by repeatedly stacking layers of material is provided. The information processing apparatus includes a volume calculation unit configured to calculate a volume of the modeling target and a support-part-modeling-method determination unit configured to determine a modeling method of a support part that supports the modeling target according to the volume.

[ADVANTAGEOUS EFFECTS OF INVENTION]

According to an embodiment of the present invention, an information processing apparatus capable of modeling a support part that can be easily removed is provided.

BRIEF DESCRIPTION OF THE DRAWINGS

Fig. 1A is a drawing illustrating an overhang part and a support part thereof.
Fig. 1B is a drawing illustrating an overhang part and a support part thereof.
Fig. 2A is an example of a drawing illustrating an outline of a support-part-modeling-method determination procedure.
Fig. 2B is an example of a drawing illustrating an outline of a support-part-modeling-method determination procedure.
Fig. 3 is a drawing illustrating a configuration example of a modeling system.
Fig. 4 is an example of a hardware configuration diagram of an information processing apparatus.
Fig. 5A is an example of a hardware configuration diagram of an additive manufacturing apparatus.
Fig. 5B is an example of a hardware configuration diagram of an additive manufacturing apparatus.
Fig. 6 is an example of a functional configuration diagram of a modeling system including the information processing apparatus and the additive manufacturing apparatus.
Fig. 7 is an example of a drawing illustrating G code as an example of print data.
Fig. 8 is an example of a flowchart illustrating a procedure for determining a space in which the support part is needed.
Fig. 9A is an example of a 3D model illustrating the determination whether the support part is needed.
Fig. 9B is an example of angle calculation.
Fig. 9C is an example illustrating an angle.
Fig. 9D is an example illustrating an angle.
Fig. 10A is an example of a drawing illustrating a calculation method of a volume of a 3D model represented by 3D data.
Fig. 10B is an example of a drawing illustrating a calculation method of a volume of a 3D model represented by 3D data.
Fig. 10C is an example of a drawing illustrating a calculation method of a volume of a 3D model represented by 3D data.
Fig. 11A is an example of a drawing illustrating a location of a support part.
Fig. 11B is an example of a drawing illustrating a location of a support part.
Fig. 12A is an example of a drawing schematically illustrating the degree of filling of a support part.
Fig. 12B is an example of a drawing schematically illustrating the degree of filling of a support part.
Fig. 12C is an example of a drawing schematically illustrating the degree of filling of a support part.
Fig. 13 is an example of a sequence diagram illustrating a procedure of a modeling system for modeling a modeling object by designing a support part.
Fig. 14A is an example of a drawing schematically illustrating a support part whose degree of filling in a vicinity portion is lower than the degree of filling in a non-vicinity portion.
Fig. 14B is an example of a drawing schematically illustrating a support part whose degree of filling in a vicinity portion is lower than the degree of filling in a non-vicinity portion.
Fig. 14C is an example of a drawing schematically illustrating a support part whose degree of filling is changed with three or more stages.
Fig. 15A is a drawing illustrating an example of a cross-sectional shape of a support part whose contour portion is modeled.
Fig. 15B is a drawing illustrating an example of a cross-sectional shape of a support part whose contour portion is modeled.
Fig. 15C is a drawing illustrating an example of a cross-sectional shape of a support part whose contour portion is modeled.
Fig. 16A is an example of a drawing illustrating a support part whose inside is not filled.
Fig. 16B is an example of a drawing illustrating a support part whose inside is not filled.
Fig. 16C is an example of a drawing illustrating a support part whose inside is not filled.
Fig. 16D is an example of a drawing illustrating a support part whose inside is not filled.
Fig. 16E is an example of a drawing illustrating a support part whose inside is not filled.

DETAILED DESCRIPTION OF THE PREFERRED EMBODIMENTS

In the following, an embodiment of the present invention will be described while making reference to the drawings.

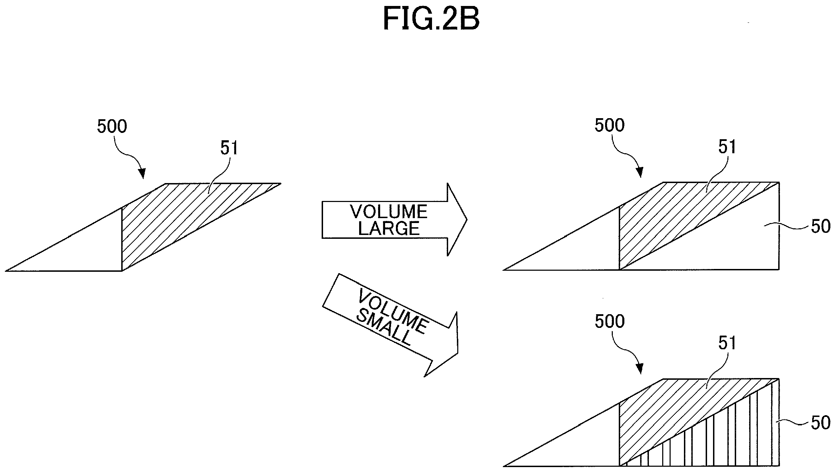

Fig. 2A and Fig. 2B are examples of a drawing illustrating an outline of a modeling-method determination procedure for a support part 50. In the case where an overhang part is modeled as illustrated in Fig. 2A, or in the case where a three-dimensional part, which is hung from upwards and under which there is no modeling object, is modeled, the support part 50 is needed. Here, the portion, for which the support part 50 is needed, is a portion right above the support 50 (hereinafter, referred to as a support needed part 51).
In Fig. 2B, the support needed part 51 having an overhang structure is indicated by a shaded line area. When the support part 50 is identified, the support needed part 51 can be also identified. Therefore, an information processing apparatus connected to an additive manufacturing apparatus, which will be described below, is enabled to calculate the volume of the support needed part 51.

The information processing apparatus determines a modeling method of the support part 50 based on a result of the volume calculation. By doing the above, it is possible not only to obtain removability of the support part 50 but also to obtain modeling quality of the modeling object. It should be noted that the modeling of the support needed part 51 is not performed properly if the support part 50 is not sufficiently strong with respect to the mass of the support needed part 51 (the support needed part 51 may be deformed by its own weight and the shape of the modeling object may become different from the 3D model 500).

Therefore, in the case where the volume (or the mass) is large, as illustrated in top right of Fig. 2B, the support part 50 is modeled in such a way that the degree of filling of the support part 50 (e.g., the filling rate of material described below) is high. Further, in the case where the volume (or the mass) is small, as illustrated in bottom right of Fig. 2B, the degree of filling of the support part 50 is caused to be low. The support part 50 is modeled with high density in top right of Fig. 2B and the support part 50 is modeled with low density in bottom right of Fig. 50 (including only pillars). Therefore, it is possible not only to obtain removability of the support part 50 but also to obtain modeling quality of the modeling object.

<Terminology>

A shape of a modeling target refers to a three-dimensional shape to be modeled by an additive manufacturing apparatus. The three-dimensional shape may be an object or a human being. In an embodiment of the present invention, the term "3D model" is used as an example of the three-dimensional shape.

Data relating to the shape of the modeling target may be any data representing a three-dimensional shape. In an embodiment of the present invention, the term "3D data" is used as an example of the data representing a three-dimensional shape.

The support part that supports the modeling target is a part that is modeled in order to suppress or prevent the deformation of the modeling object due to the material weight or the like. The support part contacts the modeling object, supports the modeling object, and suppresses the degradation of modeling quality. In an embodiment of the present invention, the support part is referred to as a support part. The modeling method of the support part includes information related to how to model the support part. The modeling method may provide impact on the strength of the support part. Specifically, for example, the modeling method may be related to the degree of filling, the structure of the filling, etc. The determining element of the modeling method of the support part may be a volume of the support needed part 51. For example, even if the area of the support needed part 51 is small, it is preferable that the support needed part 51 is supported by the support part 50 in the case where the thickness in the z-axis is large. Further, in the case where the volume is large, naturally, the mass tends to be also large. Therefore, it is possible to determine the modeling method of the support part 50 by determining the volume alone. However, the modeling method can be determined more accurately by considering the mass.

<Configuration example>

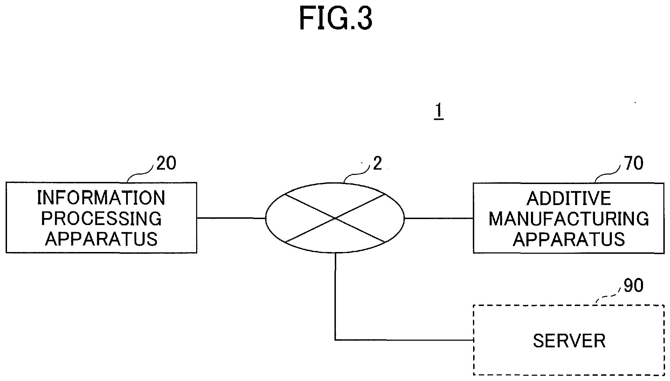

FIG. 3 is a drawing illustrating a configuration example of a modeling system 1. The modeling system 1 includes an information processing apparatus 20 and an additive manufacturing apparatus 70 that are connected via a network 2. The network 2 is mainly implemented by an in-house LAN (local area network) but may also include a WAN (wide area network) or the Internet. Further, the information processing apparatus 20 and the additive manufacturing apparatus 70 may be connected via a dedicated line such as a USB cable. The network 2 and the dedicated line may be implemented by wire, or a part or all of the network 2 and the dedicated line may be implemented by a wireless technology, such as a wireless LAN or Bluetooth (registered trademark), for example.

The information processing apparatus 20 may be mainly a PC (Personal Computer) or any apparatus that is capable of running a program described below. Other than the PC, for example, a tablet terminal, a smartphone, a PDA (Personal Digital Assistant), a mobile phone, a wearable PC, a game machine, a car navigation terminal, an electronic whiteboard, or a projector may also be used as the information processing apparatus 20.

The information processing apparatus 20 analyzes 3D data to construct a 3D model and slices the 3D model at equal intervals of a layer thickness (layer pitch) to create slice data. The slice data is converted into print data in the form of G code, and this print data is transmitted to the additive manufacturing apparatus 70. The print data may be stored in a storage medium, such as a USB memory or an SD memory card, and provided to the additive manufacturing apparatus 70, for example. The additive manufacturing apparatus 70 may read the print data from the storage medium that is installed in a storage medium I/F (interface), for example. In this case, the network 2 may not be required for providing the print data to the additive manufacturing apparatus 70.

It should be noted that the information processing apparatus 20 and the additive manufacturing apparatus 70 may be integrated. That is, the additive manufacturing apparatus 70 may implement the functions of the information processing apparatus 20 and perform processes such as creating print data from 3D data, for example. Further, the information processing apparatus 20 may transmit 3D data to a server 90 and the server 90 may transmit the print data to the additive manufacturing apparatus 70, for example.

The additive manufacturing apparatus 70 models a modeling object based on print data. The additive manufacturing apparatus 70 may use modeling methods of fused deposition modeling (FDM), material jetting, binder jetting, selective laser sintering (SLS), stereolithography (SLA), etc. Fused deposition modeling (FDM) involves extruding thermally melted resin from a nozzle and stacking layers of resin to model a modeling object. Other than resin, metal fluids, or the like, may be used as the material to be processed by the additive manufacturing apparatus 70. Material jetting is a method that involves ejecting resin from an ink jet head and solidifying and layering the resin using ultraviolet rays. Binder jetting is a method that involves ejecting a liquid binder from an ink jet head to solidify layers of gypsum or resin powder one by one. Selective laser sintering (SLS) is a method that involves irradiating a powdery material with laser to sinter the material. Stereolithography (SLA) is a method that involves curing liquid photopolymer resin to form layer upon layer of resin with ultraviolet laser.

Of all methods described above, it is fused deposition modeling (FDM) and material jetting that require the support part 50. It should be noted that the support part 50 may be generated also in the other methods in order to improve the modeling quality of the modeling object by using the volume and mass of the support needed part 51. A generation method of the support part 50 according to an embodiment of the present invention is not limited to the modeling method of the additive manufacturing apparatus 70, and may be applied to an additive manufacturing apparatus 70 that generates a support part 50.

<Hardware Configuration>

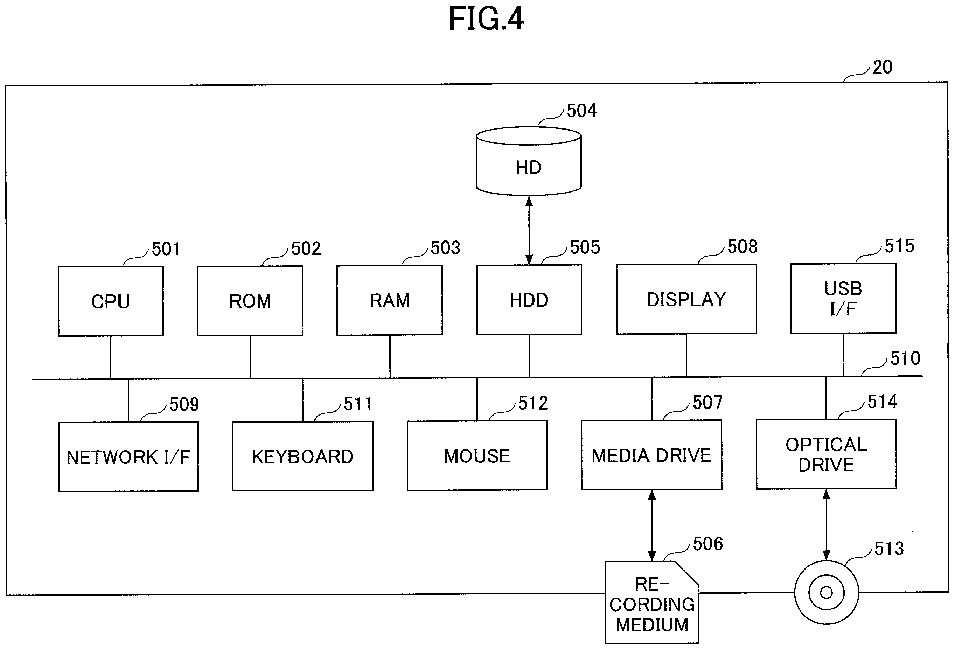

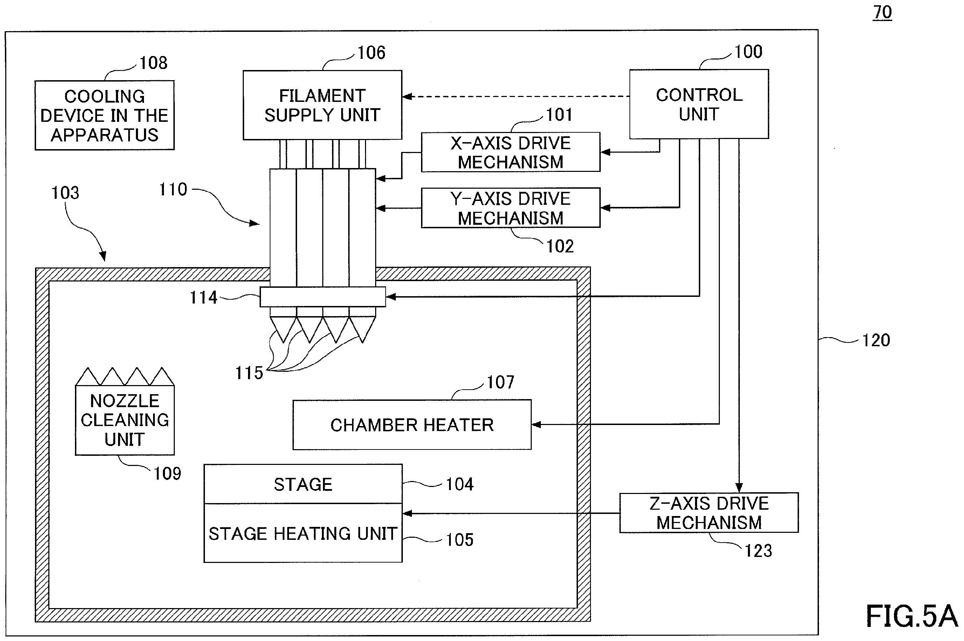

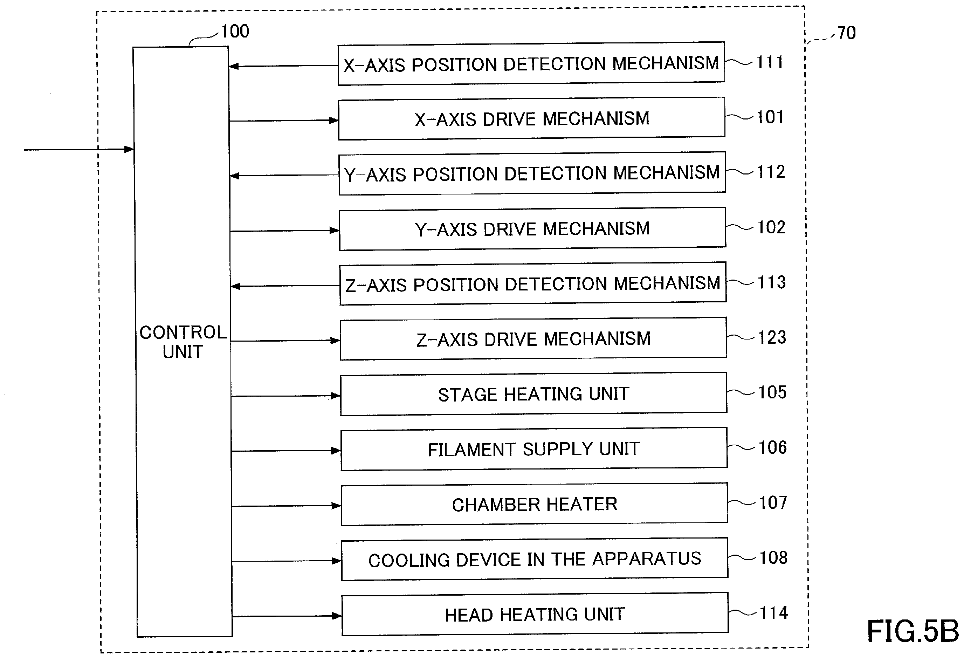

In the following, referring to Fig. 4 and Fig. 5, hardware configurations of the information processing apparatus 20 and the additive manufacturing apparatus 70 are described.

<<Hardware Configuration of Information Processing Apparatus>>

Fig. 4 is an example of a hardware configuration diagram of an information processing apparatus 20. The information processing apparatus 20 includes a CPU 501, a ROM 502, a RAM 503, an HDD (Hard Disk Drive) 505, a display 508, a network I/F (interface) 509, a keyboard 511, a mouse 512, a media drive 507, an optical drive 514, a USB I/F 515, and a bus line 510, such as an address bus or a data bus for establishing electrical connection between the above hardware elements.

The CPU 501 controls the overall operation of the information processing apparatus 20. The ROM 502 stores a program such as an IPL (Initial Program Loader) for driving the CPU 501. The RAM 503 is used as a work area of the CPU 501. The HD 504 stores programs, an OS (Operating System) and various data items. The HDD 505 controls reading or writing of various data items with respect to the HD 504 under control of the CPU 501. The network I/F 509 is an interface for enabling data communication using the network 2. The keyboard 511 is a device having a plurality of keys for enabling a user to input characters, numerical values, various instructions, and the like. The mouse 512 is a device for enabling the user to select and execute various instructions, select a processing target, move a cursor, and the like. The media drive 507 controls reading or writing of data with respect to a recording medium 506 such as a flash memory. The optical drive 514 controls reading or writing of various data items with respect to an optical disk (e.g., CD-ROM, DVD, Blu-Ray disc) 513 as an example of a removable recording medium. The display 508 displays various information, such as a cursor, a menu, a window, a character, or an image. The display 508 may be a projector, for example. The USB I/F 515 is an interface for establishing connection with a USB cable, a USB memory, or the like.

<<Hardware Configuration of Additive Manufacturing Apparatus>>

Fig. 5A is an example of a hardware configuration diagram of an additive manufacturing apparatus 70. The additive manufacturing apparatus 70 includes a chamber 103 inside a body frame 120. The interior of the chamber 103 is a processing space for modeling a three-dimensional modeling object, and a stage 104 as a mounting table is provided inside the chamber 103 (i.e., in the processing space). The three-dimensional modeling object is modeled on the stage 104.

The modeling head 110 as a modeling means is provided above the stage 104 inside the chamber 103. The modeling head 110 includes discharge nozzles 115 for discharging a filament corresponding to a building material for modeling an object. In an embodiment of the present invention, four ejection nozzles 115 are provided in the modeling head 110. However, any arbitrary number of discharge nozzles 115 may be provided in the modeling head 110. The modeling head 110 also includes a head heating unit 114 as an example of a modeling material heating means for heating the filament supplied to the discharge nozzles 115.

The filament is a fine wire that is arranged in a wound state when loaded in the additive manufacturing apparatus 70. The filament is supplied to each of the discharge nozzles 115 of the modeling head 110 by the filament supply unit 106. Note that a different filament may be supplied to each of the discharge nozzles 115 or the same filament may be supplied to each of the discharge nozzles 115. In an embodiment of the present invention, the filament supplied by the filament supply unit 106 is heated and melted by the head heating unit 114 and extruded from a predetermined discharge nozzle 115 so that the melted filament may be successively layered to model a three-dimensional modeling object on the stage 104.

Note that in some cases, a support material that does not form a part of the modeling object may be supplied to one or more of the discharge nozzles 115 of the modeling head 110 instead of the filament corresponding to the building material. Such a support material is usually a material that is different from the filament used as the modeling material and is ultimately removed from the three-dimensional object formed by the filament. The support material is also heated and melted by the head heating unit 114 and extruded from a predetermined ejection nozzle 115 so that the melted support material may be successively layered.

The X-axis drive mechanism 101 is arranged to extend in the lateral direction of the additive manufacturing apparatus 70, and the modeling head 110 is held by the X-axis drive mechanism 101 to be movable in the longitudinal direction of the X-axis drive mechanism 101 (X-axis direction). The modeling head 110 can be moved in the lateral direction (X-axis direction) of the additive manufacturing apparatus 70 by a driving force of the X-axis drive mechanism 101. The Y-axis drive mechanism 102 is arranged to extend in the longitudinal direction (Y-axis direction) of the additive manufacturing apparatus 70, and both ends of the X-axis drive mechanism 101 are each slidably held by the Y-axis drive mechanism 102 to be movable in the longitudinal direction of the Y-axis drive mechanism 102 (Y-axis direction). As the X-axis drive mechanism 101 is moved by a driving force of the Y-axis drive mechanism 102 along the Y-axis direction, the modeling head 110 is enabled to move along the Y-axis direction.

Further, in an embodiment of the present invention, a chamber heater 107 as a processing space heating means for heating the interior of the chamber 103 is provided inside the chamber 103 (processing space). In an embodiment of the present invention, a three-dimensional modeling object is modeled by using fused deposition modeling (FDM), and as such, the temperature inside the chamber 103 is preferably maintained at a target temperature when performing the modeling process. Therefore, in an embodiment of the present invention, before the modeling process is started, a preheating process is performed in advance to raise the temperature inside the chamber 103 to the target temperature. During this preheating process, the chamber heater 107 heats the interior of the chamber 103 so that the temperature inside the chamber 103 rises to the target temperature, and during the modeling process, the chamber heater 107 heats the interior of the chamber 103 in order to maintain the temperature inside the chamber 103 at the target temperature. The operation of the chamber heater 107 is controlled by a control unit 100, which is described below.

Fig. 5B is a control block diagram of an additive manufacturing apparatus according to an embodiment of the present invention. The additive manufacturing apparatus 70 includes an X-axis position detection mechanism 111 for detecting a position of the modeling head 110 in the X-axis direction. A detection result of the X-axis position detection mechanism 111 is transmitted to the control unit 100. The control unit 100 controls the X-axis drive mechanism 101 based on the detection result to move the modeling head 110 to a target X-axis direction position.

Further, in an embodiment of the present invention, the additive manufacturing apparatus 70 includes a Y-axis position detection mechanism 112 for detecting a Y-axis direction position of the X-axis drive mechanism 101 (position of the modeling head 110 in the Y-axis direction). A detection result of the Y-axis position detection mechanism 112 is sent to the control unit 100. The control unit 100 controls the Y-axis drive mechanism 102 based on the detection result to move the head 110 held by the X-axis drive mechanism 101 to a target Y-axis direction position.

Further, in an embodiment of the present invention, the additive manufacturing apparatus 70 includes a Z-axis position detection mechanism 113 for detecting a position of the stage 104 in the Z-axis direction. The detection result of the Z-axis position detection mechanism 113 is transmitted to the control unit 100. The control unit 100 controls the Z-axis drive mechanism 123 based on the detection result and moves the stage 104 to a target Z-axis direction position.

By controlling the movement of the modeling head 110 and the stage 104 in the above-described manner, the control unit 100 may be able to move the relative three-dimensional positions of the modeling head 110 and the stage 104 inside the chamber 103 to target three-dimensional positions.

<Functional Configuration Example of Modeling System>

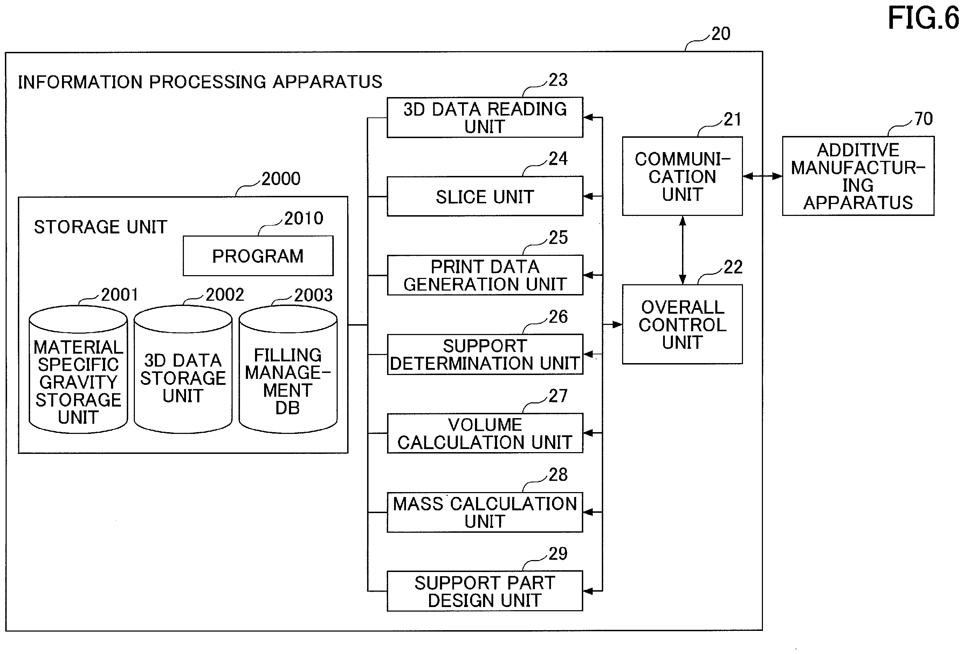

Fig. 6 is an example of a functional configuration diagram of a modeling system 1 including the information processing apparatus 20 and the additive manufacturing apparatus 70.

<<Information Processing Apparatus>>

A program 2010 is executed in the information processing apparatus 20. By executing the program 2010, the information processing apparatus 20 can implement the following main functions.

The information processing apparatus 20 includes a communication unit 21, an overall control unit 22, a 3D data reading unit 23, a slice unit 24, a print data generation unit 25, a support determination unit 26, a volume calculation unit 27, a mass calculation unit 28, and a support part design unit 29. These functions of the information processing apparatus 20 may be implemented by one or more of the hardware elements illustrated in Fig. 4 operating based on instructions from the CPU 501 executing the program 2010 that has been loaded from the HD 504 into the RAM 503, for example.

Further, the information processing apparatus 20 includes a storage unit 2000 implemented by the HD 504 illustrated in Fig. 4. The storage unit 2000 includes a material specific gravity storage unit 2001, a 3D data storage unit 2002, a filling management DB 2003, and the program 2010. The program 2010 may be stored in the recording medium 506 or the optical disk 513 of Fig. 4 and distributed in such a state, or the program 2010 may be delivered to the information processing apparatus 20 from a server that distributes the program, for example.

The program 2010 may be called a printer driver or an application program, for example. Further, the program 2010 according to an embodiment of the present invention may include two or more programs such as a printer driver and an application program, for example.

The 3D data storage unit 2002 stores 3D data. The 3D data may be read from a portable storage medium, such as a USB memory, by the information processing apparatus 20 or the additive manufacturing apparatus 70, the 3D data may be downloaded from a server connected via a network, or the 3D data may be created by a 3D application running on the information processing apparatus 20, for example.

The 3D application may be software that is called "3DCAD" or "3DCG", for example. The data format of the 3D data output by the 3D application may be STL (Standard Triangulated Language), for example, but it is not limited thereto. Other example data formats that may be used include 3MF, PLY (Polygon file format), or OBJ, for example.

[Table 1]

| solid ascii | | | |
|---|---|---|---|
| facet normal | 0.000000 | 0.000000 | 1.000000 |
| outer loop | | | |
| vertex | 0.000000 | 2.000000 | 5.000000 |
| vertex | -2.000000 | 2.000000 | 5.000000 |
| vertex | 0.000000 | 0.000000 | 5.000000 |
| endloop | | | |
| endfacet | | | |
| facet normal | 0.000000 | 0.000000 | 1.000000 |
| outer loop | | | |
| vertex | 0.000000 | 0.000000 | 5.000000 |
| vertex | -2.000000 | 2.000000 | 5.000000 |
| vertex | -2.000000 | 0.000000 | 5.000000 |
| endloop | | | |
| endfacet | | | |
| facet normal | 0.000000 | 0.000000 | -1.000000 |
| outer loop | | | |
| vertex | 0.000000 | 0.000000 | 0.000000 |
| vertex | -2.000000 | 0.000000 | 0.000000 |
| vertex | 0.000000 | 2.000000 | 0.000000 |
| endloop | | | |
| endfacet | | | |
| ... (OMITTED) ... | | | |
| Endsolid | | | |

Table 1 illustrates an example of 3D data. Table 1 represents 3D data in the STL format. The STL is a format that represents a shape using a series of triangle polygons. Note that information of one triangle includes the vertices of the triangle in a three-dimensional space and the normal vector of the triangle.

In Table 1, information between "facet" and "endfacet" represents one triangle. Further, "normal" represents the normal vector of the triangle, and "vertex" represents coordinates of the three vertices of the triangle. A three-dimensional shape may be represented by repeatedly describing such triangle data. The surface of the 3D model 500 may be represented by the vertices of triangles, and it is possible to calculate the slice data, to determine existence and no-existence of the support part 50, and to calculate a volume of the support needed part 51 by using geometric calculation.

It should be noted that, as described above, the 3D data may be in any format as long as it represents a three-dimensional shape. Further, if the surface shape of a three-dimensional shape is known, the surface can be divided into triangles and converted into STL.

[Table 2]

| MATERIAL | SPECIFIC GRAVITY (g/m$^3$J |
|---|---|
| MATERIAL A | $\rho$ a |
| MATERIAL B | $\rho$ b |
| MATERIAL C | $\rho$ c |

Table 2 is a table schematically illustrating information stored in the material specific gravity storage unit 2001. In the table of the material specific gravity storage unit 2001, materials used for modeling are associated with their specific gravities. The material used by the additive manufacturing apparatus 70 is instructed by a user, for example. Therefore, it is possible for the additive manufacturing apparatus 70 to uniquely identify the specific gravity of the material. It should be noted that a material, which is used for the support part 50 and whose releasability from the material is high, may be associated with the material and the associated result may be stored.

[Table 3]

| MASS OF SUPPORT NEEDED PORTION | DEGREE OF FILLING |
|---|---|
| 0g ～ 100g | 80% |
| 100g ～ 200g | 90% |
| 200g ～ | 100% |

Table 3 is a table schematically illustrating information stored in the filling management DB 2003. In the filling management DB 2003, the mass of the support needed portion 51 is associated with the degree of filling and the associated result is stored. The degree of filling indicates what rate of the volume of the support part 50 is to be filled with the material. The degree of filling is represented by a percentage or a ratio that is equal to or less than 100%.

As illustrated in Table 3, the greater the mass of the support needed portion 51, the greater is the degree of filling. Specifically, the degree of filling corresponds to a rate of filling inside the support part 50. Values of the degree of filling in Table 3 are defined in such a way that the values are necessary or sufficient for supporting the support needed portion 51. Therefore, when the mass of the support needed portion 51 is determined, the degree of filling can be determined.

Alternatively, the information processing apparatus 20 may determine the degree of filling that is necessary or sufficient for supporting the support needed portion 51 according to physical simulation. By using the physical simulation, the mass, which can be supported by the degree of filling of the support part 50, can be determined. Therefore, by constructing the support part 50 according to several degrees of filling, the degree of filling that is necessary or sufficient for supporting the support needed portion 51 is determined.

(Function of Information Processing Apparatus)

The communication unit 21 of the information processing apparatus 20 is realized by instructions from the CPU 501 and the OS, the network I/F 509, etc., illustrated in Fig. 4, and communicates with the additive manufacturing apparatus 70. Specifically, the communication unit 21 of the information processing apparatus 20 transmits print data converted from the 3D data to the additive manufacturing apparatus 70.

The overall control unit 22 is realized by instructions from the CPU 501 illustrated in Fig. 4, etc., controls the overall processes performed by the information processing apparatus 20, and requests functional units to perform the processes.

The 3D data reading unit 23 is realized by instructions from the CPU 501 illustrated in Fig. 4, the HDD 504, etc., and reads the 3D data in the 3D data storage unit 2002.

The slice unit 24 is realized by instructions from the CPU 501 illustrated in Fig. 4, etc., and performs processes related to the modeling of the 3D model 500. Specifically, the slice unit 24 arranges the 3D model 500 represented by the 3D data in a virtual space of the additive manufacturing apparatus 70. It should be noted that the slice unit 24 may set an orientation of the 3D model 500 upon receiving an operation from the user. Further, the slice unit 24 slices the 3D model 500 at equal intervals in the Z-axis direction (intervals of a layer thickness) to create slice data, and generates a cross-sectional shape of the 3D model 500 at each z coordinate obtained from the slice data. Because the 3D data is represented by polygons, for example, when a z coordinate is determined, x coordinates and y coordinates of the polygon at the z coordinate are obtained. The slice data is a set of the x coordinates and the y coordinates of a cross section of the polygon.

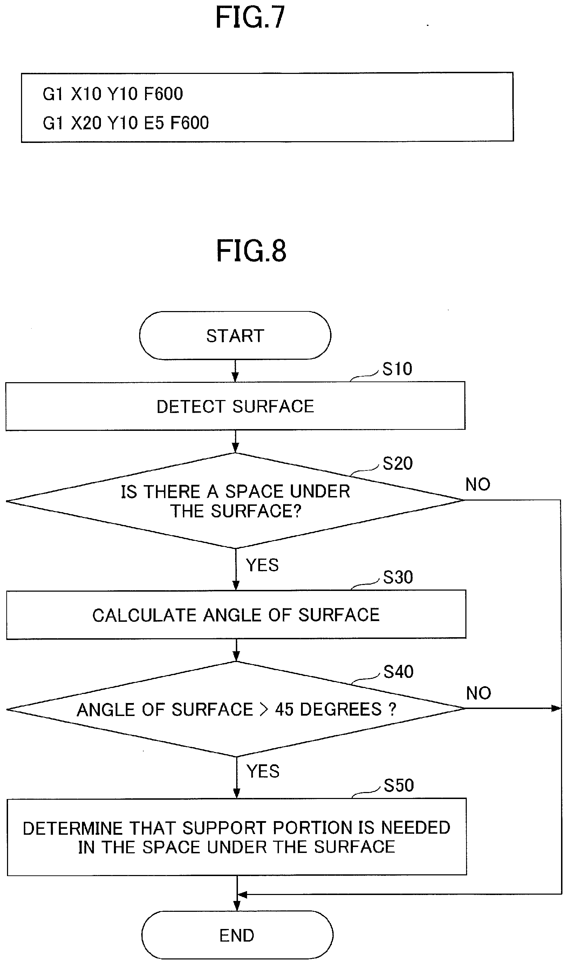

The print data generation unit 25 is realized by instructions from the CPU 501 illustrated in Fig. 4, etc., and generates print data based on the slice data. The print data is described by G code format in many cases. However, the format is not limited to G code. The format of the print data may be any format as long as it can be interpreted by the additive manufacturing apparatus 70. An example of G code will be described by referring to Fig. 7.

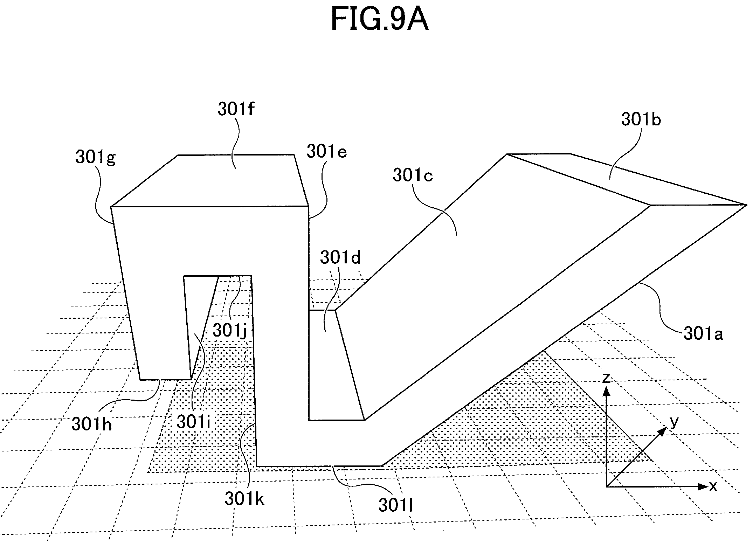

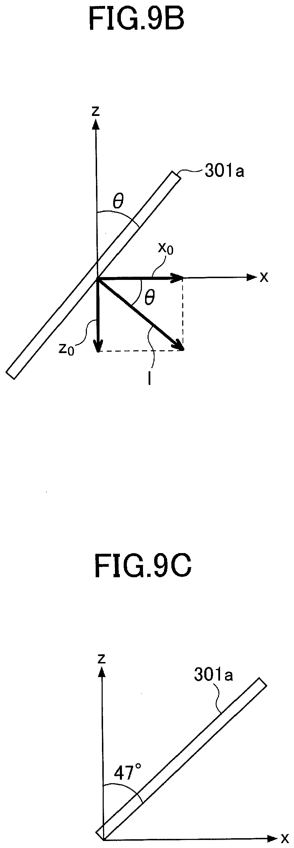

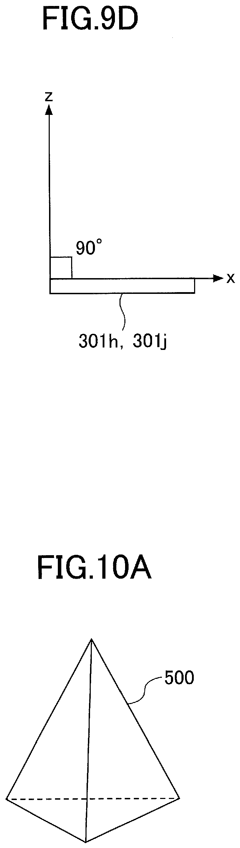

The support determination unit 26 is realized by instructions from the CPU 501 illustrated in Fig. 4, etc., and determines a portion of the 3D model 500 for which the support part 50 is needed (support needed portion 51). The details will be described by referring to Fig. 8 and Fig. 9.

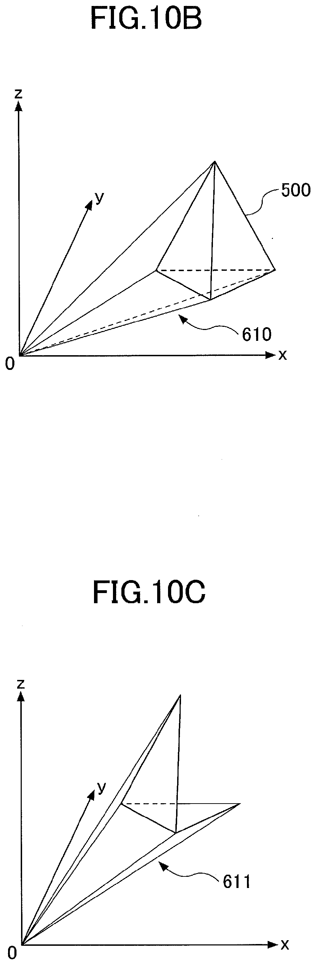

The volume calculation unit 27 is realized by instructions from the CPU 501 illustrated in Fig. 4, etc., and calculates the volume of the support needed portion 51. The details will be described by referring to Fig. 10.

The mass calculation unit 28 is realized by instructions from the CPU 501 illustrated in Fig. 4, etc., and calculates the mass of the support needed portion 51. The mass is calculated as a product of the volume of the support needed portion 51 and the specific gravity of the material used at the time of modeling.

The support part design unit 29 is realized by instructions from the CPU 501 illustrated in Fig. 4, etc., and determines the modeling method of the support part 50 (how to model the support part 50). In order to make the determination, at least the volume of the support needed portion 51 is used, and preferably, the mass of the support needed portion 51 is used.

<Print Data (G Code)>

Fig. 7 is an example of a drawing illustrating G code as an example of print data. One line represents one instruction of the print data. There are various instructions in the print data. Here, instructions related to moving ejection nozzles 115 are illustrated. Instructions starting with "G1" indicate moving the ejection nozzles 115 and supplying a material. The first line is an instruction for moving to a location of X=10, Y=10, at the speed of 600 [mm/minute]. The second line is an instruction for supplying 5 [mm] of material while moving to a location of X=20, Y=10, at the speed of 600 [mm/minute].

G code format is used by an additive manufacturing apparatus 70 with FDM method in many cases. However, any format may be used for the print data as long as it can represent trajectories of the ejection nozzles 115 (sets of coordinates of two points), moving speeds, and amounts of supplied material. Further, appropriate print data is used in an additive manufacturing apparatus with a method other than FDM method according to the method.

<Determination of Existence and No-existence of Support Part>

The support part 50 is needed with respect to a portion of the 3D model 500 that has a space thereunder (support needed portion 51). It should be noted that the degree of the space size determining whether or not the support part 50 is necessary depends on the modeling method or on the material characteristics such as viscosity, specific gravity, etc. A determination example will be described below.

Fig. 8 is an example of a flowchart illustrating a procedure for determining a space in which the support part is needed. Fig. 9A is an example of a 3D model 500 illustrating the determination whether the support part is needed.

First, the support determination unit 26 detects surfaces of the 3D model 500 (S10). The surfaces are boundary surfaces between the 3D model 500 and the rest of the world. The surfaces may be portions that touch the space.

Next, the support determination unit 26 determines whether there is a space under the surface (S20). "There is a space under the surface" means that, when a normal vector of the surface is represented by an x component, a y component, and a z component, the z component is negative. The normal of the surface is included in the 3D data (STL). This determination process may be performed for each surface of the polygons.

In the case where the determination in step S20 is "NO", at least the surface is in contact with an upper space, or, the normal direction of the surface is parallel to the x-y plane (the surface is parallel to z-axis), and the support determination unit 26 determines that the support part 50 is not necessary for this surface.

In the case where the determination in step S20 is "YES", at least the surface is in contact with a lower space, and the support determination unit 26 calculates an angle of the surface with respect to z-axis direction (S30). It is known empirically that, even if the surface faces downwards, the support part 50 is not necessary if the angle is less than certain degrees. The angle of the surface is calculated easily from the normal of the surface, which will be described in detail while referring to Figs. 9B-9D.

The support determination unit 26 determines whether the angle of the surface is equal to or greater than 45 degrees (S40). A threshold of 45 degrees is just an example. The threshold value may be determined according to the material viscosity, etc.

In the case where the determination in step 40 is "NO", the support determination unit 26 determines that the support part 50 is not necessary for the space under the surface because the angle of the surface is small.

In the case where the determination in step 40 is "YES", the support determination unit 26 determines that the support part 50 is necessary for the space under the surface because the angle of the surface is large (S50).

Fig. 9A is used for further descriptions. For the sake of description convenience, surfaces illustrated in the figure will be described (there is no need for describing surfaces provided on the depth side of the paper because they do not need the support part). Further, in Fig. 9A, one surface may include a set of multiple triangles. However, the multiple triangles (polygons) included in the surface are parallel to each other, and it may be assumed that the multiple triangles are viewed as one triangle.

Surfaces 301a to 3011 are detected in a range illustrated in Fig. 9A. Of the surfaces 301a to 3011, the three surfaces 301a, 301h, and 301j have a space under the surfaces.

Next, angle calculations will be described by referring to Fig. 9B. As illustrated in Fig. 9C, an angle between the surface 301a and z-axis needs to be calculated. For the sake of simplicity, the angle is considered in x-z plane (y component is zero). The normal vector has an x component, $x_0$ (positive), and a z component, $z_0$ (negative). As illustrated in the figure, the inclination $\theta$ of the surface 301a with respect to z direction corresponds to an angle of the normal vector with respect to x-axis. Therefore, $\theta$ is obtained according to the following formula.

$$\theta=\arctan(z_0/x_0)$$

As illustrated in Fig. 9D, the inclinations of the surfaces 301h and 301j can be calculated in the same way. The inclinations of the surfaces 301h and 301j with respect to the vertical direction are 90 degrees, for example. Therefore, it is determined that the support part 50 is necessary for the spaces under the surfaces 301a, 301h, and 301j.

Portions above the surfaces 301a, 301h, and 301j, for which the support part 50 is necessary, are the support needed portions 51. Because coordinates of the surfaces 301a, 301h, and 301j are known, the support needed portions 51 can be identified by these coordinates.

<Volume of Support Needed Portion>

Next, volume calculation of the support needed portion 51 will be described by referring to Figs. 10A-10C. Figs. 10A-10C are examples of drawings illustrating a calculation method of a volume of a 3D model 500 represented by 3D data. For the sake of description convenience, as illustrated in Fig. 10A, a triangular pyramid is used an example of the 3D model 500. It should be noted that all of the normals face outwards from the triangular pyramid.

Next, as illustrated in Fig. 10B, in addition to four vertexes of the triangular pyramid, an origin "O" is added in a three-dimensional space, and a polygon-like shape 610 is generated by connecting the origin "O" with the vertexes of the triangular pyramid. As illustrated in Fig. 10C, in addition to the volume of the triangular pyramid, a volume of an added polygon-like shape 611 is added.

Therefore, the volume of the triangular pyramid (3D model 500) that needs to be calculated is (the volume of the polygon-like shape 610 illustrated in Fig. 10B) - (the volume of the added polygon-like shape 611 illustrated in Fig. 10C). The polygon-like shape 610 illustrated in Fig. 10B and the added polygon-like shape 611 illustrated in Fig. 10C each include triangle polygons. Therefore, each of their volumes can be calculated as a sum of volumes of tetrahedrons made of triangle polygons and an origin. The volume of a tetrahedron can be calculated according to the following formula.

When x, y, z coordinates of vertexes of a triangle polygon are represented by $(x\_1, y\_1, z\_1)$, $(x\_2, y\_2, z\_2)$, $(x\_3, y\_3, z\_3)$, the volume of the tetrahedron is calculated by

$$[(y\_1*z\_2-z\_1*y\_2)*x\_3+(z\_1*x\_2-x\_1*z\_2)*y\_3+(x\_1*y\_2-y\_1*x\_2)*z\_3]/6.$$

となる。

It should be noted that the volume of the added polygon-like shape 611 illustrated in Fig. 10C is a negative value and the volume of the polygon-like shape 610 illustrated in Fig. 10B is a positive value, and the volume of the 3D model 500 illustrated in Fig. 10A can be calculated as a sum of volumes of all tetrahedrons.

It should be noted that the volume calculation method illustrated in Figs. 10A-10C is just an example. The support needed portion 51 may be represented by a set of triangular pyramids and the volume of the support needed portion 51 may be calculated accordingly. The triangular pyramids are generated as follows. For example, an arbitrary point (vertex) is generated inside the support needed portion 51, and a triangular pyramid, which includes the arbitrary point and a triangle, is generated. In the case where a triangular pyramid cannot be generated by using the arbitrary point (where the triangular pyramid would protrude the support needed portion 51). The process of generating triangular pyramids is repeated until the triangular pyramids fill the entire support needed portion 51. With the above processes, the support needed portion 51 of the 3D model 500 can be represented by a set of triangular pyramids. The volume of a triangular pyramid can be calculated from the bottom area and the height. Therefore, the sum of volumes of the triangular pyramids is the volume of the support needed portion 51.

<Determination of Degree of Filling>

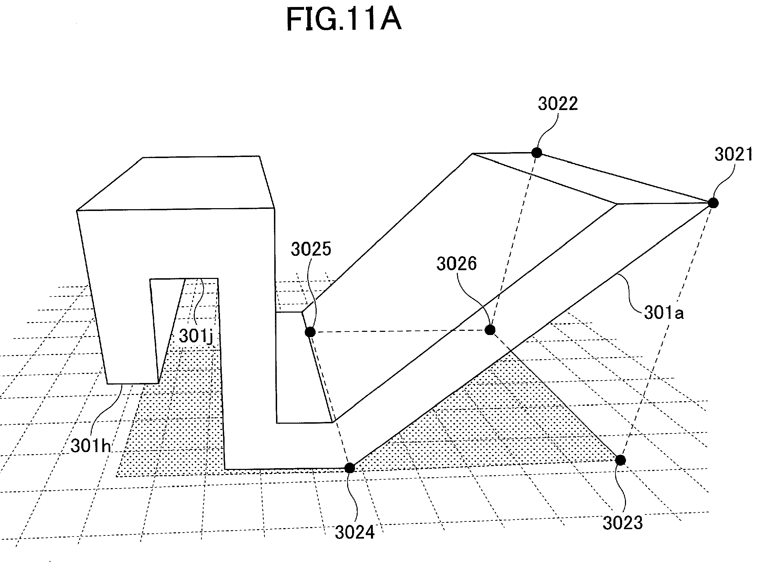

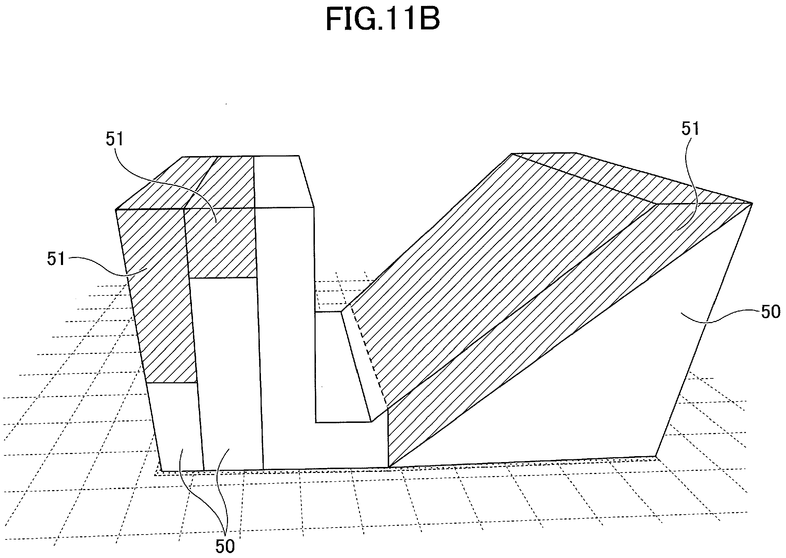

First, referring to Figs. 11A and 11B, locations of the support parts 50 will be described. Fig. 11A is an example of a drawing illustrating a location of a support part 50. As described above, the surfaces 301a, 301h, and 301j, which need the support part 50, are determined. Locations of the support part 50 are spaces under the surfaces 301a, 301h, and 301j. X coordinates and y coordinates of the surface 301a can be determined from the 3D data, and x coordinates and y coordinates of vertexes 3021, 3022, 3024, and 3025 of the surface 301a are also known. Therefore, intersection points 3023 and 3026, at which perpendicular lines from the vertexes 3021 and 3022 cross a surface z=0, can be easily calculated.

As illustrated in Fig. 11B, the support part 50 is identified by these vertexes (3021 through 3026). The support part 50 under the surface 301h and the support part 50 under the surface 301j can be also calculated in the same way.

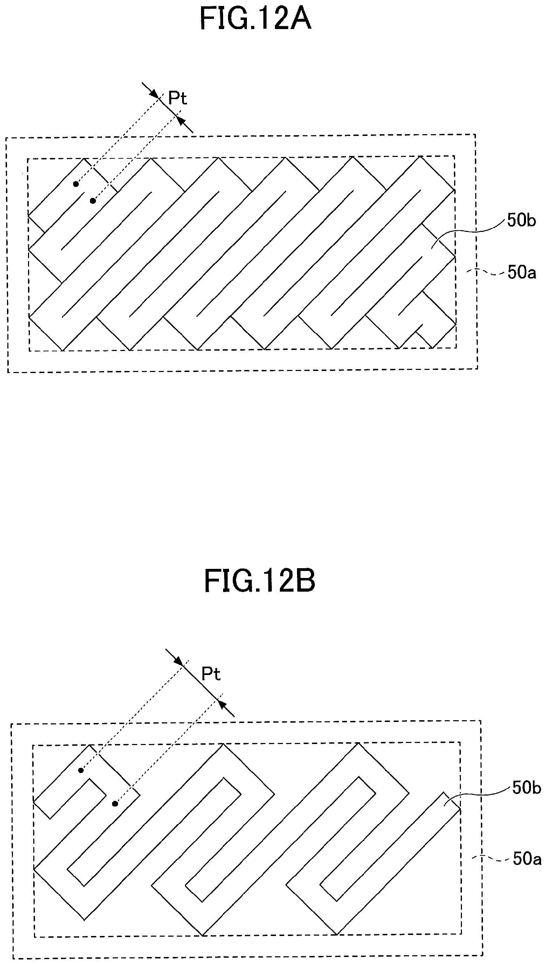

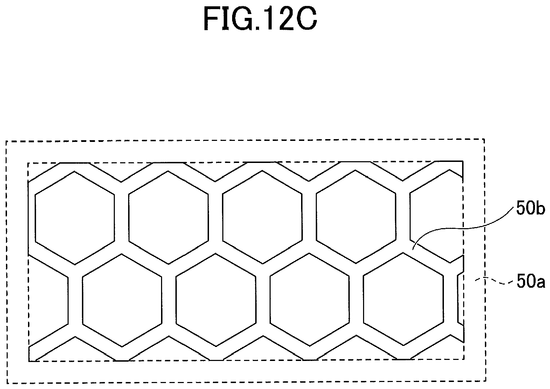

Referring to Figs. 12A to 12C, the determination of the degree of filling of the support part 50 will be described. Fig. 12C is an example of a drawing schematically illustrating the degree of filling of a support part 50. The volume calculation unit 27 calculates the volume of the support needed portion 51, the mass calculation unit 28 calculates the mass of the support needed portion 51, and the support part design unit 29 can determine the degree of filling.

For example, in the case of FDM-type additive manufacturing apparatus 70, the eject nozzles 115 eject the material while performing the reciprocating motion in a range of the support part 50, and model (manufacture, produce) the support part 50. Fig. 12A illustrates an example of a cross-sectional shape of the support part 50 that is modeled by the ejected material. Fig. 12A illustrates a case in which the support part 50 is modeled at a filling rate at which the degree of filling is 100%. In other words, the eject nozzles 115 eject the material into a filling portion 50b while performing reciprocating motion without creating a gap with respect to the contour portion 50a (which is not modeled) of the support part 50.

Therefore, it is possible to lower the degree of filling (filling rate) by reducing the number of reciprocating motions of the eject nozzles 115, or by increasing the gap between the forward path and the return path of the reciprocating motion. Fig. 12B illustrates an example of a cross-sectional shape of the support part 50 in a case in which the support part 50 is modeled at a filling rate (the degree of filling) of about 50%. As illustrated in Fig. 12B, it can be seen that the degree of filling is reduced because the number of reciprocating motions is small or the gap between the forward path and the return path of the eject nozzles 115 is large.

The number of reciprocating motions or the gap between the forward path and the return path is controlled by a distance (referred to as a returning pitch, Pt) across which the eject nozzles 115 move before starting the material ejection after the 180 degree direction change. The support part design unit 29 is enabled to change the filling rate by changing the return pitch Pt according to the degree of filling.

The support part design unit 29 generates, as the data of the support part 50, the coordinates of the support part 50 (coordinates used for identifying the shape of the support part 50) and the return pitch Pt. The print data generation unit 25 generates print data of the support part 50 based on the above-described data of the support part 50. The shape of a cross section of the support part 50 according to the height in z-axis can be calculated. Therefore, the print data generation unit 25 generates the print data used for filling the cross section with the material at the return pitch Pt.

Further, as illustrated in Fig. 12C, the structure of the filling portion 50b may be changed. Fig. 12C illustrates the shape of a cross section of the support part 50 that is modeled with what is termed as a "honeycomb structure". With respect to the above folded structures illustrated in Fig. 12A and Fig. 12B, it is possible to change the degree of filling by filling the filling portion 50b according to the honeycomb structure.

Further, it is possible for the honeycomb structure to have a relatively high strength with respect to a small filling rate. If the filling rate is the same, the strength of the honeycomb structure is higher than the strength of the structures illustrated in Fig. 12A and Fig. 12B. Therefore, the support part design unit 29 may change the structure to the honeycomb structure instead of changing the degree of filling in the case where the mass is equal to or greater than a predetermined value. Alternatively, the support part design unit 29 may not only change the degree of filling but also change the structure to the honeycomb structure.

Further, the support part design unit 29 may change the filling rate while maintaining the honeycomb structure according to the mass. With the honeycomb structure, it is possible to increase the filling rate by increasing the size of the hexagon, and it is possible to decrease the filling rate by decreasing the size of the hexagon.

<Operation Procedure>

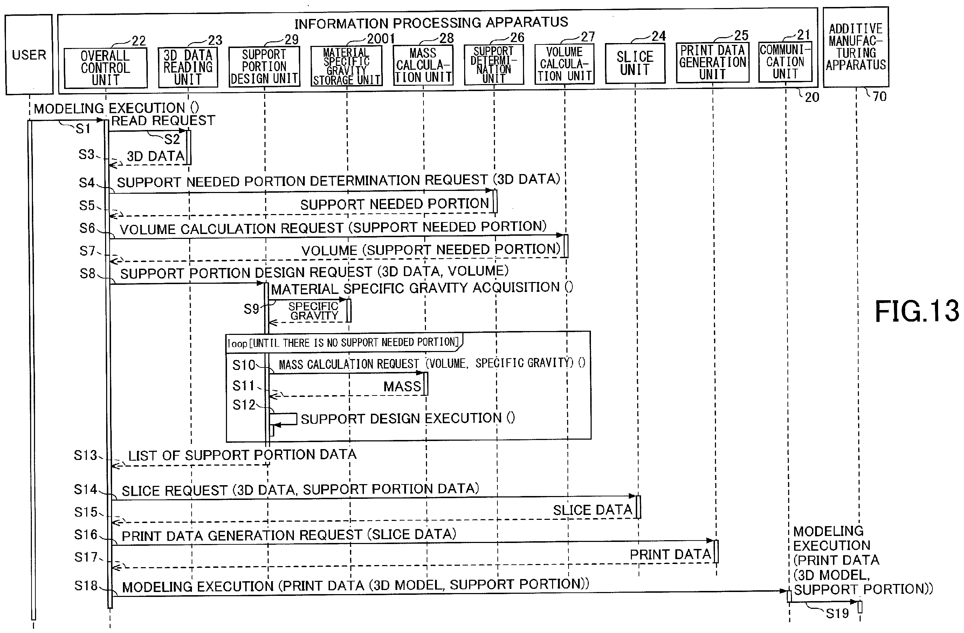

Fig. 13 is an example of a sequence diagram illustrating a procedure of a modeling system 1 for modeling a modeling object by designing a support part 50.

S1: First, a user operates an information processing apparatus 20 to perform modeling.

S2: In response to the user operation, the overall control unit 22 of the information processing apparatus 20 requests the 3D data reading unit 23 to read the 3D data.

S3: The 3D data reading unit 23 reads the 3D data from the storage unit 2000 and transmits the 3D data to the overall control unit 22.

S4: Next, the overall control unit 22 transmits the 3D data to the support determination unit 26 and requests the support determination unit 26 to determine whether there are the support needed portions 51 or not.

S5: The support determination unit 26 determines whether there are the support needed portions 51 as described above, and transmits a result of determination (the support needed portions 51) to the overall control unit 22.

S6: Next, the overall control unit 22 transmits the support needed portions 51 to the volume calculation unit 27 and requests the volume calculation unit 27 to calculate the volume.

S7: The volume calculation unit 27 calculates the volume of each of the support needed portions 51.

S8: The overall control unit 22 transmits the volumes and the 3D data to the support part design unit 29 and requests the support part design unit 29 to design the support part(s) 50.

S9: The support part design unit 29 obtains, from the material specific gravity storage unit 2001 of the storage unit 2000, the specific gravity of the material to be used for modeling.

S10: The support part design unit 29 transmits the volume of the support needed portion 51 and the specific gravity to the mass calculation unit 28 and requests the mass calculation unit 28 to calculate the mass.

S11: The mass calculation unit 28 calculates the mass of the support needed portion 51 based on a product of the volume of the support needed portion 51 and the specific gravity. The calculated mass is transmitted to the support part design unit 29.

S12: The support part design unit 29 designs the support part 50 based on the mass. As described above, the support part design unit 29 determines the degree of filling by referring to the filling management DB 2003 according to the mass, determines the return pitch Pt according to the degree of filling or determines the size of the honeycomb structure.

The support unit design unit 29 repeats the process steps S10 to S12 for as many times as the number of the support needed portions 51.

S13: The support part design unit 29 transmits the data set of the support part 50 to the overall control unit 22 for as many times as the number of the support parts 50.

S14: the overall control unit 22 transmits the 3D data and the data sets of the support parts 50 to the slice unit 24 and requests the slice unit 24 to perform slicing.

S15: The slice unit 24 generates the slice data from the 3D data and the data sets of the support parts 50 and transmits the slice data to the overall control unit 22.

S16: The overall control unit 22 transmits the slice data to the print data generation unit 25 and requests the print data generation unit 25 to generate print data.

S17: The print data generation unit 25 generates the print data from the slice data and transmits the print data to the overall control unit 22.

S18: The overall control unit 22 requests the communication unit 21 to transmit the 3D model 500 and the print data of the support parts 50 and to request the execution of modeling.

S19: The communication unit 21 transmits the 3D model 500 and the print data of the support parts 50 to the additive manufacturing apparatus 70 and requests the execution of modeling. It should be noted that the print data may be stored in a recording medium such as a USB memory or an SD memory card, and that the recording medium may be inserted by a user to the recording medium I/F of the additive manufacturing apparatus 70. In this case, the user operates the additive manufacturing apparatus 70 and instructs the additive manufacturing apparatus 70 to execute the modeling.

As described above, according to an information processing apparatus 20 according to an embodiment of the present invention, it is possible to change the degree of filling of the support part 50 based on the volume or the mass of the support needed portion 51, and thus, it is possible not only to achieve removability of the support part 50 but also to achieve modeling quality of the modeling object.

<Other Support Part Modeling Method 1>

Some of other modeling methods of the support part 50 will be described below. For example, according to the mass of the support needed portion 51, the support part design unit 29 may cause the degree of filling of a portion of the support part 50 that contacts the support needed portion 51 and the vicinity of the portion to be low, and cause the degree of filling of the rest of the support part 50 to be high. In other words, the degree of filling of the material at the vicinity of the support needed portion 51 is lower than the degree of filling at the non-vicinity.

According to the above described arrangement, the degree of filling at the vicinity of the support needed portion 51 is low, and it is easy to remove the support part 50 from the support needed portion 51. Further, it is possible to cause the degree of filling of the support part 50 at the non-vicinity portion to be high, and thus, it is possible for the support part 50 to sufficiently support the support needed portion 51. It should be noted that the support part 50 may be removed by the user or may be removed by using chemicals or water.

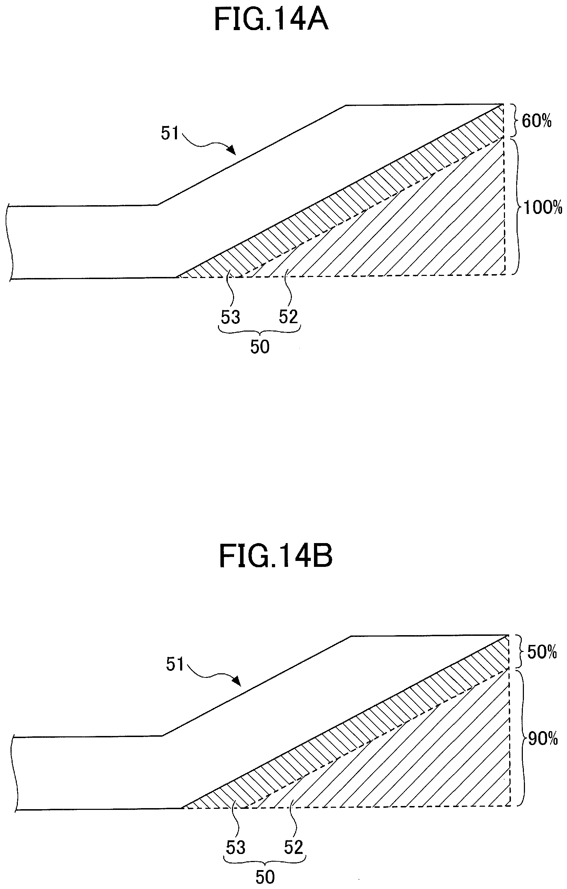

Fig. 14A is an example of a drawing schematically illustrating a support part 50 whose degree of filling at the vicinity portion 53 is lower than the degree of filling at the non-vicinity portion 52. In the filling management DB 2003, it is predetermined that, with respect to the mass A of the support needed portion 51, for example, the degree of filling at the vicinity portion 53 of the support part 50 is 60%, and the degree of filling at the non-vicinity part 52 that is other than the vicinity part 53 is 100%.

Further, as illustrated in Fig. 14B, in the filling management DB 2003, it is predetermined that, with respect to the mass B of the support needed portion 51, the degree of filling at the vicinity portion 53 of the support part 50 is 50%, and the degree of filling at the non-vicinity part 52 that is other than the vicinity part 53 is 90%. It is assumed that mass B < mass A.

As described above, by predetermining the degree of the vicinity portion 53 and the degree of the non-vicinity portion 52 according to the mass, it is possible to further improve the removablity of the support part 50, and it is possible not only to achieve removability of the support part 50 but also to achieve modeling quality of the modeling object.

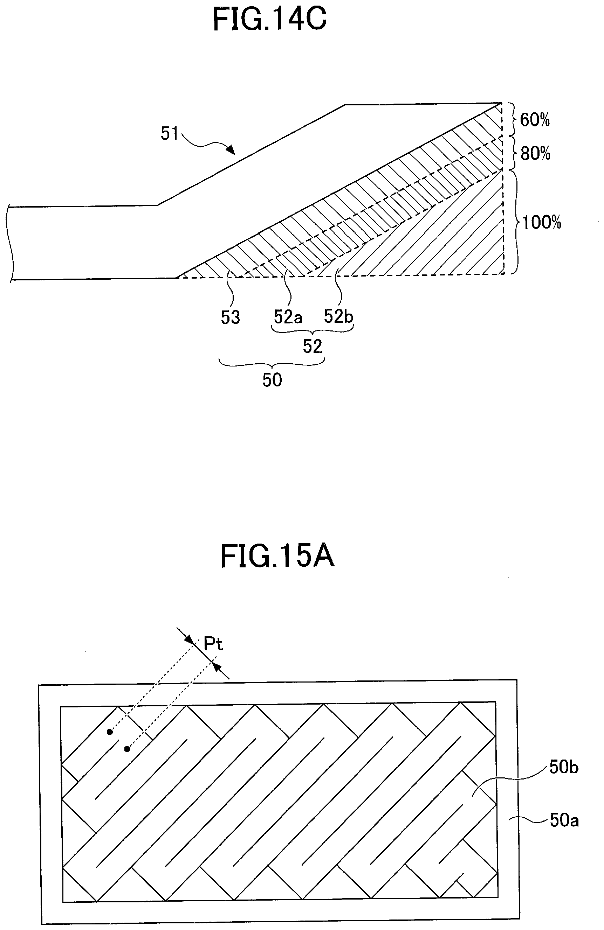

It should be noted that, as illustrated in Fig. 14C, the support part design unit 29 may change the degree of filling of the support part 50 with three or more stages. In Fig. 14C, as an example, with respect to a predetermined mass of the support needed portion 51, the degree of filling at the vicinity portion 53 of the support part 50 is 60%, the degree of filling at a non-vicinity portion 52a is 80%, and the degree of filling at another non-vicinity portion 52b that is further away from the vicinity portion 53 is 100%. According to the above arrangement, in addition to the above-described effects, it is possible to reduce the material of the support part 50.

Further, the degree of filling at the vicinity portion 53 may be input to the information processing apparatus 20 by an operation of the user, or, the degree of filling that is needed to support the support needed portion 51 may be calculated by physical simulation.

<Other Support Part Modeling Method 2>

The support part 50 will be removed. Therefore, the accuracy of the appearance is not so important. Therefore, as illustrated in Figs. 12A-12C, it is not necessary to model the contour portion of the support part 50. However, by modeling the contour portion 50a of the support part 50, the filling portion 50b of the support part 50 can be integrated with the contour portion 50a.

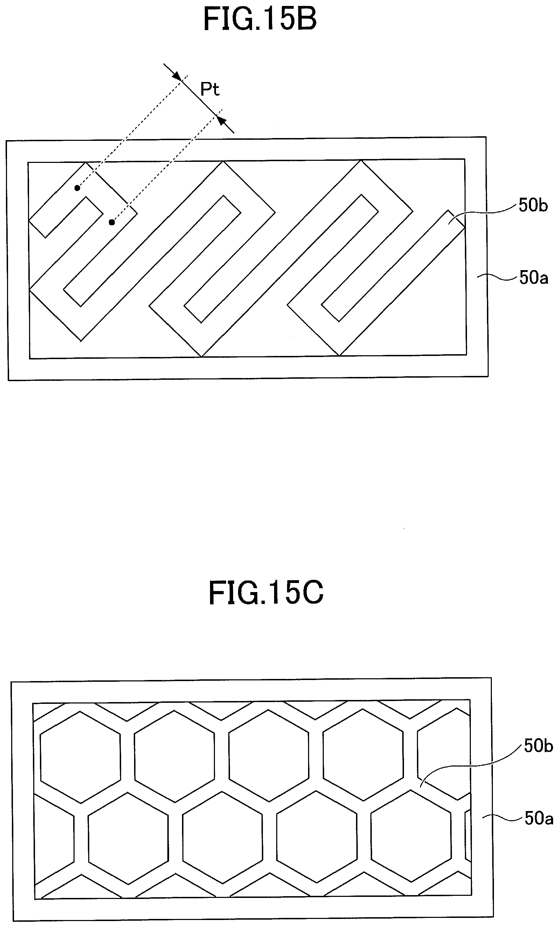

Figs. 15A-15C illustrate cross sectional shapes of the support part 50 in which the contour portion 50a is modeled. It should be noted that the descriptions will be mainly related to differences between Figs. 15A-15C and Figs. 12A-12C. As illustrated in Fig. 15A, the contour portion 50a of the support part 50 is modeled, and the material of the filling portion 50b is ejected to contact the contour portion 50a. According to the above-described support part 50, in the case where the user removes the support part 50 manually, it is easy to remove the entire support part 50. It should be noted that, as illustrated in Fig. 12A and Fig. 12B, in the case where the support part 50 is modeled from the continuously ejected material, the support part 50 may be cut in the middle when it is pulled by the user and it may take time to remove the support part 50. In a case of the honeycomb structure as illustrated in Fig. 12C, the support part 50 may be cut at a weak portion when it is pulled by the user and it may take time to remove the entire support part 50.

With respect to the above, according to the support part 50 in Figs. 15A-15C, a wall is modeled to surround the filling portion 50b according to the contour portion 50a, and it is possible for the user to hold the wall and remove the support part 50 as an integrated unit.

It should be noted that the support part design unit 29 may change the thickness of the contour portion 50a according to the mass or the volume of the support needed portion 51. According to the above arrangement, it is possible to maintain the modeling quality in the case where the mass or the volume of the support needed portion 51 is large.

<Other Support Part Modeling Method 3>

In the case where the volume or the mass of the support needed portion 51 is sufficiently small, only the contour portion 50a may modeled. In other words, in the case where the area of the support needed portion 51 is equal to or less than a threshold value, the support part design unit 29 designs the support part 50 that includes only the contour portion 50a without including the filling portion 50b. The smaller the material used for the support part 50, the more easily the support part 50 can be removed. Therefore, the support part design unit 29 designs the support part 50 without the filling portion 50b in the case where the support part 50 sufficiently functions without the filling portion 50b.

It can be easily understood that, when the area of the support needed portion 51 is sufficiently small, the material does not readily drop even if the support part 50 is not filled. However, even if the area of the support needed portion 51 is small, the support part 50 is needed in the case where the thickness in z-axis direction is large, and thus, after all, it is necessary that the volume of the support needed portion 51 is sufficiently small. Further, the small area of the support needed portion 51 means the small mass (the support needed portion 51 would drop if the mass is large), and thus, after all, the small area of the support needed portion 51 means that the mass of the support needed portion 51 is sufficiently small.

It should be noted that the threshold value, which is used for determining to design the support 50 including only the contour portion without filling the inside of the support part 50, is affected by the viscosity and the specific gravity of the material. Therefore, the threshold value is determined experimentally. Alternatively, the threshold value may be determined according to physical simulations.

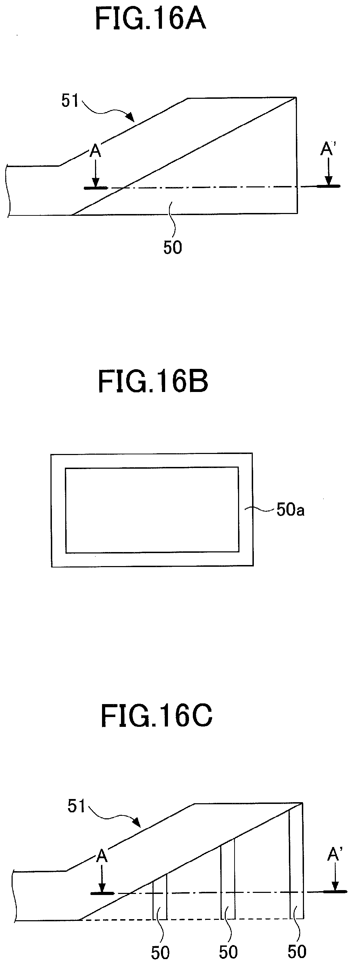

Fig. 16A illustrates an example of a support part 50 whose inside is not filled. Fig. 16B illustrates an A-A' line cross sectional view of Fig. 16A. In Fig. 16A, the volume or the mass of the support needed portion 51 is equal to or less than a threshold value, and a support part 50 including only the contour portion 50a is modeled. Because the support part 50 includes only the contour portion 50a, when the user removes the support part 50 manually, it is easy to remove the support part 50. It should be noted that it is also possible to cause the vicinity portion 53, which is at the vicinity of the support needed portion 51, to be a low density structure.

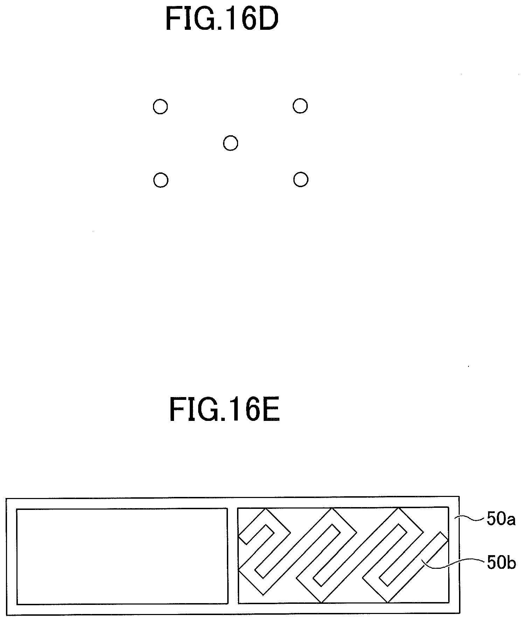

Further, as illustrated in Fig. 16C, the support part 50 including only pillars may be modeled. Fig. 16C illustrates an example of a support part 50 that includes pillars. Fig. 16D illustrates an A-A' line cross sectional view of Fig. 16C. In Fig. 16C, the volume or the mass of the support needed portion 51 is equal to or less than a threshold value, and a support part 50 including only pillars is modeled. Because the support part 50 includes only pillars, when the user removes the support part 50 manually or chemically, it is easy to remove the support part 50.

Because the volume or the mass of the support needed portion 51 is equal to or less than a threshold value, in the case where the support part design unit 29 designs the support part 50 including only the contour portion 50a or designs the support part 50 including pillars, it is preferable that the support part design unit 29 designs the support part 50 further according to the volume or the mass. For example, in the support part 50 illustrated in Fig. 16A, the thickness of the contour portion 50a is changed according to the volume or the mass. Further, in the support part 50 illustrated in Fig. 16C, the number of the pillars or the diameter of the pillars is changed according to the volume or the mass. According to the above arrangement, removability of the support part 50 is further improved.

Further, according to the mass or the volume of the support needed portion 51, as illustrated in Fig. 16E, the support part 50 that is filled and the support part 50 that is not filled may be combined. In other words, in the case where the mass or the volume of the support needed portion 51 is not so small as to design the support part 50 with no filling portion 50b but is relatively small, the support part design unit 29 designs the support part 50 by combining the support part 50 that is filled and the support part 50 that is not filled. According to the above arrangement, it becomes easier not only to obtain removability of the support part 50 but also to obtain modeling quality of the modeling object.

<Other Application Examples>

As described above, an information processing apparatus 20 that determines the modeling method of the support part 50 according to the volume of the support needed portion 51 is described according to one or more embodiments of the present invention. The present invention is not limited by the embodiments. Various modifications and replacements may be made without departing from the spirit of the present invention.

For example, according to the embodiments, the materials are mainly fluids such as resin or metal. However, the additive manufacturing apparatus 70 may model a modeling object by ejecting cells of human beings, animals, plants, etc. For example, the additive manufacturing apparatus 70 may generate a certain organ or a cell sheet by using cells.

For example, in an example of a functional configuration diagram of Fig. 6, for the sake of the easy understanding of the processes of the information processing apparatus 20, the functions of the information processing apparatus 20 is divided based on main functions. The present invention is not limited by the dividing way of the processing units or the names of the processing units. The processes of the information processing apparatus 20 may be divided into further number of processing units according to the processing contents. Further, one processing unit may be further divided to include more processes.

Further, for example, some of the functions of the information processing apparatus 20 may be included by the additive manufacturing apparatus 70.

Further, in one or more embodiments, the modeling method of the support part 50 is determined by calculating a part of the volume of the 3D model 500. However, the modeling method may be determined based on the entire volume of the 3D model 500. For example, by modeling the support 50, it is possible to model a modeling object corresponding to the 3D model 500 that does not start from the height zero.

It should be noted that the volume calculation unit 27 is an example of a volume calculation unit, the support part design unit 29 is an example of a support part modeling method determination unit, the mass calculation unit 28 is an example of a mass calculation unit, and the material specific gravity storage unit 2001 is an example of a storage unit. Further, the process of the information processing apparatus 20 described in one or more embodiments is an example of an information processing method.

The present application is based on and claims the benefit of priority of Japanese Priority Application No. 2016-052620 filed on March 16, 2016, the entire contents of which are hereby incorporated herein by reference.

[DESCRIPTION OF THE REFERENCE NUMERALS]

1 modeling system
20 information processing apparatus
21 communication unit
22 overall control unit
23 3D data reading unit
24 slice unit
25 print data generation unit
26 support determination unit
27 volume calculation unit
28 mass calculation unit
29 support part design unit
50 support part
51 support needed portion
70 additive manufacturing apparatus
2010 program

**Claims**

1. An information processing apparatus that provides data for modeling to an additive manufacturing apparatus that models a modeling object by repeatedly stacking layers of a material, the information processing apparatus comprising:

   a volume calculation unit configured to, by using data related to a shape of a modeling target, calculate a volume of the modeling target; and
   a support part modeling method determination unit configured to determine a modeling method of a support part that supports the modeling target according to the volume.

2. The information processing apparatus according to claim 1, further comprising: a mass calculation unit configured to obtain specific gravity of the material from a storage unit in which the specific gravity of the material is stored, and calculate a mass of the modeling target by using the specific gravity, wherein

the support part modeling method determination unit determines the modeling method of the support part according to the mass.

3. The information processing apparatus according to claim 2, wherein the support part modeling method determination unit increases a filling degree of the support part in accordance with an increase of the mass and decreases the filling degree of the support part in accordance with a decrease of the mass.

4. The information processing apparatus according to claim 2, wherein the support part modeling method determination unit changes a filling structure of the support part according to the mass.

5. The information processing apparatus according to claim 3 or 4, wherein the support part modeling method determination unit causes the filling degree of a vicinity portion that contacts the modeling target to be lower than the filling degree of a non-vicinity portion that is further away from the modeling target than the vicinity portion.

6. The information processing apparatus according to any one of claims 3 to 5, wherein the support part modeling method determination unit determines to model a contour portion that surrounds the support part.

7. The information processing apparatus according to claim 2, wherein the support part modeling method determination unit determines to model only a contour portion that surrounds the support part in a case where the mass is equal to or less than a threshold value.

8. The information processing apparatus according to claim 2, wherein the support part modeling method determination unit determines to model the support part that supports the modeling target with one or more pillars in a case where the mass is equal to or less than a threshold value.

9. A program that causes an information processing apparatus that provides data for modeling to an additive manufacturing apparatus that models a modeling object by repeatedly stacking layers of a material to perform functions comprising:

   a volume calculation unit configured to, by using data related to a shape of a modeling target, calculate a volume of the modeling target; and
   a support part modeling method determination unit configured to determine a modeling method of a support part that supports the modeling target according to the volume.

10. An information processing method performed by an information processing apparatus that provides data for modeling to an additive manufacturing apparatus that models a modeling object by repeatedly stacking layers of a material, the information processing method comprising:

    calculating, by a volume calculation unit, by using data related to a shape of a modeling target, a volume of the modeling target; and
    determining, by a support part modeling method determination unit, a modeling method of a support part that supports the modeling target according to the volume.

11. A modeling system comprising: an additive manufacturing apparatus that models a modeling object by repeatedly stacking layers of a material; and an information processing apparatus, the modeling system comprising:

    a volume calculation unit configured to, by using data related to a shape of a modeling target, calculate a volume of the modeling target; and
    a support part modeling method determination unit configured to determine a modeling method of a support part that supports the modeling target according to the volume.

# FIG.1A

500
601
(HEIGHT DIRECTION)
Z

# FIG.1B

500
601
(HEIGHT DIRECTION)
Z
50

# FIG.2A

500
51
50
or
51
50

# FIG.2B

EP 3 431 270 A1

# FIG.3

INFORMATION PROCESSING APPARATUS 20

ADDITIVE MANUFACTURING APPARATUS 70

SERVER 90

# FIG.4

EP 3 431 270 A1

FIG.5A

70

120

100 CONTROL UNIT

123 Z-AXIS DRIVE MECHANISM

101 X-AXIS DRIVE MECHANISM

102 Y-AXIS DRIVE MECHANISM

107 CHAMBER HEATER

104 STAGE

105 STAGE HEATING UNIT

106 FILAMENT SUPPLY UNIT

110

114

115

108 COOLING DEVICE IN THE APPARATUS

103

109 NOZZLE CLEANING UNIT

EP 3 431 270 A1

FIG.5B

# FIG.6

INFORMATION PROCESSING APPARATUS — 20

3D DATA READING UNIT — 23

SLICE UNIT — 24

PRINT DATA GENERATION UNIT — 25

SUPPORT DETERMINATION UNIT — 26

VOLUME CALCULATION UNIT — 27

MASS CALCULATION UNIT — 28

SUPPORT PART DESIGN UNIT — 29

COMMUNICATION UNIT — 21

OVERALL CONTROL UNIT — 22

ADDITIVE MANUFACTURING APPARATUS — 70

STORAGE UNIT — 2000

PROGRAM — 2010

MATERIAL SPECIFIC GRAVITY STORAGE UNIT — 2001

3D DATA STORAGE UNIT — 2002

FILLING MANAGEMENT DB — 2003

EP 3 431 270 A1

# FIG.7

```
G1 X10 Y10 F600
G1 X20 Y10 E5 F600
```

# FIG.8

START

S10
DETECT SURFACE

S20
IS THERE A SPACE UNDER THE SURFACE? — NO

YES

S30
CALCULATE ANGLE OF SURFACE

S40
ANGLE OF SURFACE > 45 DEGREES ? — NO

YES

S50
DETERMINE THAT SUPPORT PORTION IS NEEDED IN THE SPACE UNDER THE SURFACE

END

# FIG.9A

EP 3 431 270 A1

# FIG.9B

# FIG.9C

# FIG.9D

90°

301h, 301j

# FIG.10A

500

# FIG.10B

# FIG.10C

# FIG.11A

EP 3 431 270 A1

FIG.11B

EP 3 431 270 A1

# FIG.12A

# FIG.12B

# FIG.12C

50b

50a

FIG.13

EP 3 431 270 A1

# FIG.14A

# FIG.14B

# FIG.14C

# FIG.15A

## FIG.15B

## FIG.15C

## FIG.16A

## FIG.16B

## FIG.16C

# FIG.16D

# FIG.16E

50a

50b

## INTERNATIONAL SEARCH REPORT

| | International application No. |
|---|---|
| | PCT/JP2017/000231 |

### A. CLASSIFICATION OF SUBJECT MATTER
*B29C67/00*(2017.01)i, *B22F3/105*(2006.01)i, *B22F3/16*(2006.01)i, *B33Y30/00* (2015.01)i, *B33Y50/02*(2015.01)i

According to International Patent Classification (IPC) or to both national classification and IPC

### B. FIELDS SEARCHED

Minimum documentation searched (classification system followed by classification symbols)
B29C67/00, B22F3/105, B22F3/16, B33Y30/00, B33Y50/02

Documentation searched other than minimum documentation to the extent that such documents are included in the fields searched
Jitsuyo Shinan Koho        1922-1996   Jitsuyo Shinan Toroku Koho   1996-2017
Kokai Jitsuyo Shinan Koho  1971-2017   Toroku Jitsuyo Shinan Koho   1994-2017

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2008/044693 A1 (Shofu Inc.), 17 April 2008 (17.04.2008), paragraphs [0068], [0119] to [0128], [0145] to [0151]; fig. 9 to 10, 13 to 14; claims 1, 9 & US 2010/0042241 A1 paragraphs [0107], [0162] to [0174]; fig. 9 to 10, 13 to 14; claims 1, 8 & CN 101535032 A | 1-11 |
| A | JP 2012-101443 A (Seiko Epson Corp.), 31 May 2012 (31.05.2012), claims 1, 5; paragraph [0029] (Family: none) | 1-11 |

☒ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 13 March 2017 (13.03.17) | Date of mailing of the international search report 21 March 2017 (21.03.17) |
|---|---|
| Name and mailing address of the ISA/ Japan Patent Office 3-4-3,Kasumigaseki,Chiyoda-ku, Tokyo 100-8915,Japan | Authorized officer Telephone No. |

Form PCT/ISA/210 (second sheet) (January 2015)

<div align="center">

**INTERNATIONAL SEARCH REPORT**

</div>

| International application No. |
| --- |
| PCT/JP2017/000231 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2001-9920 A  (Sanyo Electric Co., Ltd.), 16 January 2001 (16.01.2001), paragraphs [0015], [0028] (Family: none) | 1-11 |
| A | WO 2015/145346 A1  (DWS S.R.L.), 01 October 2015 (01.10.2015), page 6, lines 24 to 27; fig. 3 & CA 2936171 A        & KR 10-2016-0098427 A & CN 106164913 A       & TW 201540484 A | 1-11 |
| E,X | JP 2017-7129 A  (Roland DG Corp.), 12 January 2017 (12.01.2017), claims 1, 3; paragraphs [0039] to [0040], [0074] to [0075] (Family: none) | 1-4,8-11 |
| P,X | JP 2016-107638 A  (Canon Inc.), 20 June 2016 (20.06.2016), claim 1; paragraphs [0017], [0046] & WO 2016/088334 A1 | 1-4,8-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004255839 A

- JP 2016052620 A